# EUROPEAN PATENT APPLICATION

(11) **EP 4 086 534 A1**
(43) Date of publication of application: **09.11.2022**
(21) Application number: 21172687.2
(22) Date of filing: 07.05.2021
(51) Int. Cl.: F24S 20/40, F24S 60/30

(54) **SYSTEM FOR STORING THERMAL ENERGY AND METHOD FOR OPERATING THE SYSTEM**

(71) Applicant: Siemens Gamesa Renewable Energy GmbH & Co. KG, 20097 Hamburg (DE)
(72) Inventor: Eggers, Jan Rudolf, 21640 Hannover (DE); Huck, Daniel, 22309 Hamburg (DE)
(74) Representative: SGRE-Association

(57) **Abstract**

The present invention describes a system (100, 200, 300, 400) for storing thermal energy. The system (100, 200, 300, 400) comprises a heating device (110) configured for heating a primary mass flow of a working fluid by an inconstant energy source, a thermal storage device (120) configured for storing thermal energy of the working fluid, a thermal transfer device (130) configured for transferring thermal energy of the working fluid to a thermal device, and being connected in parallel to the thermal storage device (120), and a heating device bypass line (140, 240, 340) arranged in such a way that a secondary mass flow of the working fluid bypasses the heating device (110). The heating device bypass line (140, 240, 340) comprises a dividing section (141, 241, 341) configured for dividing the working fluid into the primary mass flow and the secondary mass flow, and a merging section (142) configured for merging the primary mass flow with the secondary mass flow. The heating device bypass line (140, 240, 340) further comprises a control unit (143) for controlling the secondary mass flow such that the working fluid downstream of the merging section (142) comprises a predefined temperature, wherein the working fluid downstream of the merging section (142) is feedable to at least one of the thermal storage device (120) and the thermal transfer device (130). Furthermore, the present invention describes a method for operating the system (100, 200, 300, 400) for storing thermal energy.

## Description

### Field of invention

The present invention relates to the field of storing thermal energy. Particularly, the present invention relates to a system for storing thermal energy and to a method for operating the system.

### Art Background

In today's electro-thermal energy storage (ETES) systems electric heaters are considered as the heat source. For this type of heater, the heat transfer fluid mass flow can be adjusted in case of temperature fluctuations, e.g. by adapting the power of a blower which causes a circulation of the heat transfer fluid through the system. This method of compensating temperature fluctuations is only possible to a limited degree with other heat sources, e.g. concentrated solar power, due to operational restrictions. A typical example for such restrictions can be the mass flow through the heat source that cannot be reduced below a certain threshold as the heat transfer is linked to the mass flow through the heat source. Too low heat transfer rates decrease the efficiency and can even damage components as no sufficient cooling of the components is achieved. In case of concentrated solar power applications this would result in absorber surfaces that can suffer damages, but also electric heating wires are limited to certain maximum temperatures.

Furthermore, electro-thermal energy storage systems can be operated with different heat sources, in which thermal energy is transferred to a heat transfer fluid. Some of these heat sources have inherent temperature fluctuations, e.g. concentrated solar power towers. The thermal storage however needs to be charged with heat transfer fluid of a constant temperature, as temperature fluctuations during charging lead to an uneven temperature distribution within the storage volume which degrades the thermal stability during discharging and also lowers the maximum usable capacity of the storage.

Additionally, such an uneven temperature distribution may lead to a problem if the discharging temperature does not meet the requirements of the heat consumer, e.g. a steam generator, which is integrated into the electro-thermal energy storage system. Such temperature fluctuations may lead to a decreased efficiency of the heat consumer (especially for re-electrification) and generally to a lower attractivity of the thermal storage technology for such applications.

There may be a need for providing a robust and cost-efficient system for storing thermal energy to respond to a fluctuating energy feeding to a working fluid.

### Summary of the Invention

It may be an objective of the present invention to provide a simple, robust and cost-efficient system for storing thermal energy.

This objective may be solved by a system for storing thermal energy and by a method for operating a system for storing thermal energy according to the independent claims.

According to a first aspect of the present invention a system for storing thermal energy is disclosed. The system for storing thermal energy comprises a heating device configured for heating a primary mass flow of a working fluid by an inconstant energy source, a thermal storage device configured for storing thermal energy of the working fluid, a thermal transfer device configured for transferring thermal energy of the working fluid to a thermal device, and being connected in parallel to the thermal storage device, and a heating device bypass line arranged in such a way that a secondary mass flow of the working fluid bypasses the heating device, wherein the heating device bypass line comprises a dividing section configured for dividing the working fluid into the primary mass flow and the secondary mass flow, and a merging section configured for merging the primary mass flow with the secondary mass flow. The heating device bypass line further comprises a control unit for controlling the secondary mass flow such that the working fluid downstream of the merging section comprises a predefined temperature, wherein the working fluid downstream of the merging section is feedable to at least one of the thermal storage device and the thermal transfer device.

The system is arranged in a closed loop. Closed loop means that during an operation of the system substantially no working fluid is exchanged between the system and the environment. Hence, there is no removing of the working fluid or adding of the working fluid in larger amounts. For the purpose of compensating pressure changes in the system due to temperature fluctuations or reducing humidity in the system, a certain exchange of fluid with the environment may be made possible by a valve or the like.

The heating device may be an element which introduces thermal energy to the working fluid. The working fluid may be in a gas state or in a liquid state. The heating device may comprise the inconstant energy source which may introduce a fluctuating temperature profile to the primary mass flow.

The inconstant energy source may provide a fluctuating temperature to the working fluid, particularly to the primary mass flow flowing through the heating device. The inconstant energy source may use renewable energy for heating the working fluid. In other words, the inconstant energy source may provide an amount of thermal energy which changes during a certain period of time, e.g. during a day like solar energy. The thermal storage device may be a sensible thermal storage or a latent thermal storage. The thermal storage device is adapted for receiving thermal energy from a heated working fluid in order to store the thermal energy. The thermal storage device includes a heat storage material. The heat storage material may comprise or consist of rocks, bricks, stone, lava stone, granite, basalt and/or ceramics provided as bulk material (which may be configured as pebble bed). Preferably, the heat storage material comprises or consists of sand and/or stones, in particular gravel, rubble and/or grit. The stones can be natural stones or artificial stones (e.g. containers filled with material, such as clinkers or ceramics). The thermal storage device can thus be provided cost efficiently while being capable of storing large amounts of thermal energy. The thermal storage device is coupled with a first opening and a second opening to the fluid cycle. However, also more than two openings of the heat storage device may be provided which are coupled to the fluid cycle.

The working fluid may flow through the thermal storage device from the first opening to the second opening or from the second opening to the first opening. In the thermal storage device, the working fluid may be in direct physical contact with the thermal storage material when the working fluid flows through the thermal storage device. In an exemplary embodiment, the thermal storage material may be provided as stones and the working fluid may be air. Thus, the air and the stones may come in direct physical contact with each other when the air flows through the thermal storage device. Furthermore, in the thermal storage device the working fluid may be in indirect contact with the thermal storage material when the working fluid flows through the thermal storage device.

In an exemplary embodiment the first opening and the second opening are formed identically. But it should be understood that the first opening and the second opening may also be formed in two different shapes. In a further exemplary embodiment, the first opening and the second opening may be formed in the same side surface of the thermal storage device. This configuration may be advantageously when the overall configuration of the system for storing thermal energy does not permit another geometrical set-up because of geometrical restrains. As a matter of course, the first opening and the second opening may be formed in different side surfaces, in particular in opposite side surfaces, of the thermal storage device.

The thermal device may be the final consumer which may be operated by the thermal energy received from the thermal transfer device.

By arranging the thermal storage device and the thermal transfer device in parallel, the heating device bypass line may affect the thermal transfer device as well as the thermal storage device or only one of the thermal transfer device and the thermal storage device.

Charging the thermal storage device and at the same time supplying thermal energy to the thermal transfer device is attractive during times when a lot of thermal energy may be available at the inconstant energy source, e.g. during times of high solar radiation or of high supply of thermal energy from the inconstant heat source.

The heating device bypass line may be a duct/line and may be arranged such that the heating device is bypassed. Therefore, the secondary mass flow of the working fluid may bypass the heating device by flowing through the heating device bypass line.

The heating device bypass line is arranged in such a way that the secondary mass flow of the working fluid bypasses the heating device means that the secondary mass flow in contrast to the primary mass flow does not flow through the heating device.

By splitting the working fluid into the primary mass flow flowing through the heating device and the secondary mass flow flowing through the heating device bypass line, the system allows to compensate temperature fluctuations introduced into the working fluid by the heating device without adapting the total mass flow of the working fluid.

The amount of secondary mass flow may be adaptable dependent on the needed amount for compensating the fluctuating temperature introduced by the heating device respectively the inconstant energy source.

The dividing section may be a part of a working fluid duct or line in which the working fluid is dividable in the primary mass flow and the secondary mass flow. According to an exemplary embodiment of the invention, the working fluid may be divided in the primary mass flow and the secondary mass flow by a three-way valve. Alternatively, the dividing section may comprise a plurality of valves which are arranged and are controlled such that the working fluid is divided in the primary mass flow and the secondary mass flow. The dividing section may additionally comprise at least one temperature sensor for sensing the temperature of the working fluid. Further, the dividing section may comprise at least one sensor providing information indicative for a flow velocity or a flow rate of the working fluid. Each of the at least one sensor may also be provided in a line of the system upstream of the dividing section.

According to a further exemplary embodiment, the dividing section may comprise at least one control element for opening and closing the at least one valve in such a way that the working fluid may be divided in the primary mass flow and the secondary mass flow.

The merging section may be a part of a working fluid duct or line in which the primary mass flow is mergeable with the secondary mass flow. According to an exemplary embodiment of the invention, the primary mass flow may be merged with the secondary mass flow by a three-way valve. Alternatively, the merging section may comprise a plurality of valves which are arranged and are controlled such that the primary mass flow may be merged with the secondary mass flow. The merging section may additionally comprise at least one temperature sensor for sensing the temperature of the primary mass flow and the secondary mass flow. Further, the merging section may comprise at least one sensor providing information indicative for a flow velocity or a flow rate of the primary mass flow and/or the secondary mass flow.

According to a further exemplary embodiment, the merging section may comprise at least one control element for opening and closing a valve controlling the primary mass flow and at least one further control element for opening and closing a further valve controlling the secondary mass flow. Additionally, one control element may be configured for opening and closing the valve and the further valve.

The predefined temperature may be a constant temperature of the working fluid. The predefined temperature may be set to correspond to the preferred operating temperature of the thermal storage device and/or the thermal transfer device. During operation of the system the predefined temperature may change and be set to a different constant temperature according to a respective operating condition of the thermal storage device and/or the thermal transfer device.

According to an exemplary embodiment of the present invention, the secondary mass flow may be controlled such that if the heating device introduces a lower temperature to the primary mass flow, the secondary mass flow is reduced such that the predefined temperature may be met.

In other words, the heating device is operated such that under normal conditions the primary mass flow is heated to a first temperature/primary mass flow temperature which is higher than the operating temperature needed by the thermal storage device and/or the thermal transfer device. Additionally, the secondary mass flow is set to a first amount having a second temperature/secondary mass flow temperature which is lower than the first temperature, such that downstream of the merging section, the working fluid has a third temperature which corresponds to the predefined temperature. The predefined temperature may be set to correspond to the operating temperature needed by the thermal storage device and/or the thermal transfer device. When the heating device provides less energy, due to e.g. less supply of thermal energy by the inconstant heat source or less solar radiation, the primary mass flow is heated to a lower first temperature/primary mass flow temperature which is still higher than the predefined temperature and therefore the operating temperature needed by the thermal storage device and/or the thermal transfer device. Additionally, the secondary mass flow is set to a lower first amount having a second temperature/secondary mass flow temperature which is lower than the first temperature/primary mass flow temperature, such that downstream of the merging section, the working fluid has the same third temperature/predefined temperature corresponding to the operating temperature of the thermal storage device and/or the thermal transfer device.

Downstream of the merging section according to the present application means a position in the system which in a charging mode of the system is located downstream of the merging section. In other words, downstream of the merging section according to the present application means a location downstream of the position where the primary mass flow and the secondary mass flow are merged with each other.

Being feedable to at least one of the thermal storage device and the thermal transfer device means that the working fluid having the predefined temperature may either be guided to the thermal storage device or to the thermal transfer device or to the thermal storage device and the thermal transfer device. Particularly, when the heating device provides high thermal energy, the thermal storage device may be charged and at the same time the thermal transfer device may be supplied. When the heating device provides low thermal energy, selectively the thermal storage device may be charged or the thermal transfer device may be supplied.

According to a further exemplary embodiment of the invention, the working fluid downstream of the merging section is directly feedable to the thermal storage device and the thermal transfer device being connected in parallel.

The working fluid may be feedable to the thermal storage device and/or the thermal transfer device by a plurality of ducts or lines comprising a plurality of valves.

Further, the system allows a simultaneous charging of the thermal storage device and supplying the thermal transfer device, in times when the heating device is active. When the heating device is inactive, the thermal energy for the thermal transfer device is providable by discharging the thermal storage device. Thereby, an uninterrupted thermal transfer device supply may be possible.

Hence, in contrast to conventional approaches, by the present invention, the heating device is bypassed by the secondary mass flow of the working fluid such that a temperature fluctuation of the working fluid introduced by the heating device may be compensated. Hence, by splitting the working fluid in the primary mass flow flowing through the heating device and the secondary mass flow flowing through the heating device bypass line according to the present invention, leads to a more cost efficient and robust system for storing thermal energy.

According to a further exemplary embodiment of the present invention, the thermal storage device may be a storage module split into a plurality of chambers. Hence, the thermal storage device may have a plurality of chambers. The chambers are coupled in parallel with respect to each other. Each of the chambers which are arranged in parallel is coupled to the first opening and to the second opening.

According to a further exemplary embodiment of the present invention, the thermal storage device has a further plurality of chambers. The chambers are coupled in series with respect to each other. One of the further plurality of chambers is coupled to the first opening and another one of the further plurality of chambers is coupled to the second opening.

Each of the chambers may comprise the thermal storage material. The plurality of chambers and/or the further plurality of chambers may be integrated together in one housing. The thermal storage device may comprise the housing. The housing may comprise the plurality of chambers and the further plurality of chambers in such a way that a certain number of the chambers are coupled to each other in parallel and the remaining chambers are coupled to each other in series. Hence, a combination of chambers coupled in parallel and chambers coupled in series may be present in the thermal storage device.

According to a further exemplary embodiment of the present invention, the thermal storage device may comprise a plurality of thermal storage sub-devices. The thermal storage sub-devices are coupled in parallel with respect to each other. Each of the thermal storage sub-devices which are arranged in parallel comprises at least one inlet opening and at least one outlet opening. Each of the plurality of thermal storage sub-devices are coupled with the respective at least one inlet opening to a first opening of the thermal storage device. Further, each of the plurality of thermal storage sub-devices are coupled with the respective at least one outlet opening to a second opening of the thermal storage device.

According to a further exemplary embodiment of the present invention, the thermal storage device may comprise a further plurality of thermal storage sub-devices coupled in series with respect to each other. Each of the further plurality of thermal storage sub-devices may comprise at least one inlet opening and at least one outlet opening. One of the further plurality of thermal storage sub-devices is coupled to the first opening and another one of the further plurality of thermal storage sub-devices is coupled to the second opening.

Each of the thermal storage sub-devices may comprise a thermal storage material and a housing surrounding the thermal storage material. Further, the thermal storage device may comprise the plurality of thermal storage sub-devices and the further plurality of thermal storage sub-devices in such a way that a certain number of the thermal storage sub-devices are coupled to each other in parallel and the remaining thermal storage sub-devices are coupled to each other in series. Hence, a combination of thermal storage sub-devices coupled in parallel and thermal storage sub-devices coupled in series may be present in the thermal storage device.

According to a further exemplary embodiment of the invention, the first opening of the thermal storage device is connected to the merging section. Thereby, the working fluid comprising the predefined temperature respectively a constant temperature may be directly feedable to the thermal storage device.

According to a further exemplary embodiment of the present invention, the control unit comprises a valve for controlling the secondary mass flow.

The valve may for example be a gate valve, a non-return valve or angle valve. The valve may also comprise a plurality of sub-valves to ensure the redundancy of a cut-off of the respective line.

Controlling the secondary mass flow such that the working fluid downstream of the merging section comprises a predefined temperature means that the valve may regulate the secondary mass flow or may enable a flow of secondary mass flow from the dividing section to the merging section.

According to a further exemplary embodiment of the present invention, the control unit further comprises at least one sensor for sensing at least one of the temperature, the flow velocity, and the mass flow. Particularly, the at least one sensor is arranged in the primary mass flow at a position downstream of the heating device and upstream of the merging section. Additionally, the control unit, particularly the valve, may control the secondary mass flow based on the sensor data received from the sensor. Thereby, the predefined temperature may be reached fast and reliably.

According to a further exemplary embodiment of the present invention, the heating device comprises at least one of the group comprising a solar plant utilizing solar energy for generating thermal energy, particularly from a concentrated solar power tower or a parabolic trough solar collector, an industrial process unit generating waste heat, a technical process unit generating waste heat, and a gas turbine generating flue gas.

A solar plant utilizes thermal energy from the sun for heating the working fluid of the system for storing thermal energy.

In a concentrated solar power tower, mirrors or other reflective surfaces may be used to heat the working fluid. Using solar energy may allow to use energy which is available for everyone and free of charge.

Using waste heat generated either by a technical process or an industrial process may allow to derive advantage of something which would otherwise just be released into the ambient environment.

Using flue gas generated by a gas turbine may allow to "reuse" the thermal energy which is included in the flue gas and which would otherwise just be released into the ambient environment.

According to a further exemplary embodiment of the present invention, the thermal transfer device comprises at least one of a heat recovery steam generator, particularly with a connected Rankine water-steam cycle or with a connected industrial process requiring steam, and a heat exchanger, particularly with a connected Brayton cycle, a connected Stirling cycle or a connected industrial process requiring heat.

The thermal transfer device may be a heat exchanger. Heat exchangers are devices for transferring thermal energy from one medium to another in the direction of a temperature gradient. Heat exchangers are built for changing a temperature of a medium for example by cooling or heating. In a further exemplary embodiment, the thermal transfer device comprises an indirect heat exchanger. In indirect heat exchangers the heat is transferred from one medium to another medium over solid walls separating the two used media from each other. In a further exemplary embodiment, the thermal transfer device may comprise also a counter-flow heat exchanger, a parallel-flow heat exchanger, a double pipe heat exchanger, a shell and tube heat exchanger, a plate heat exchanger or a heat exchanger consisting of more than one stage of heat exchange for improving the efficiency.

By connecting a Brayton cycle, a Stirling cycle or an industrial process requiring heat, the thermal energy extracted from the working fluid by the heat exchanger may be used in the respective process.

The thermal transfer device may be a heat recovery steam generator (HRSG) which recovers energy from a working fluid, particularly from a hot working fluid. The HRSG may comprise e.g., four principal components. The four principal components are an economizer, an evaporator, a super-heater and a re-heater. The four principal components are put together to meet several requirements such as for example operating requirements or a given efficiency of the HRSG. Different HRSGs may be distinguished by the direction of an exhaust gas flow or the number of pressure levels integrated into the HRSG. In an exemplary embodiment, the HRSG may be a vertical type HRSG, a horizontal type HRSG, a single pressure HRSG or a multi pressure HRSG.

By connecting a Rankine water-steam cycle or an industrial process requiring steam, the thermal energy extracted from the working fluid by the HRSG may be used in the respective process.

According to a further exemplary embodiment of the present invention, the system further comprises a fluid driving device, in particular a blower, for driving the working fluid.

The fluid driving device may be, aside from a blower, a fan, a ventilator, a super-charger or a device generating a pressure gradient such that the working fluid which flows through the fluid driving device may be accelerated in a predominant and predetermined direction of the fluid driving device. The fluid driving device may also be a multi-stage device in which the working fluid is accelerated in multiple stages such that an efficiency of the fluid driving device is improved.

According to a further exemplary embodiment of the present invention, the fluid driving device is connected to the dividing section. Thus, the fluid driving device may be connected with one end to the dividing section and with the other end to the thermal storage device and the thermal transfer device connected in parallel.

It should be mentioned that it may also be possible to integrate more than one fluid driving device in the system for storing thermal energy. The second, third or further fluid driving device may also be connected to the dividing section. When more than one fluid driving device is used it may be advantageous to use a plurality of fluid driving devices which may be identical in performance and/or form. The plurality of fluid driving devices may be among themselves be connected in line or parallel. The fluid driving devices are arranged and distributed in the system such that an even flow of the working fluid may be possible during a charging mode and a discharging mode of the system for storing thermal energy.

According to a further exemplary embodiment of the present invention, the thermal transfer device is configured for being operatable at a temperature in the range of 400°C to 1500°C.

An operating temperature of the thermal transfer device may be in the range of 400°C to 1500°C. Further, the specific operating temperature or operating temperature range may depend on the used thermal transfer device.

According to a further exemplary embodiment of the present invention, the thermal storage device is configured for being operatable at a temperature in the range of 400°C and 1000°C.

An operating temperature of the thermal storage device may be in the range of 400°C to 1000°C. Further, the specific operating temperature or operating temperature range may depend on the used thermal storage device.

According to a further exemplary embodiment of the present invention, the thermal storage device and the thermal transfer device may be configured to be operatable at a substantially equal operating temperature or operating temperature range. Thereby, the thermal storage device and the thermal transfer device arranged in parallel may simultaneously be charged/supplied by the working fluid comprising the predefined temperature.

According to a further exemplary embodiment of the present invention, the heating device is configured for being operatable at a heating device operating temperature, the thermal transfer device is configured for being operatable at a thermal transfer device operating temperature, and the thermal storage device is configured for being operatable at a thermal storage device operating temperature, wherein the heating device operating temperature is higher than at least one of the thermal transfer device operating temperature and the thermal storage device operating temperature.

The heating device operating temperature may correspond to a temperature of the primary mass flow of the working fluid when the primary mass flow is flowing out of the heating device. Therefore, the heating device operating temperature may be the temperature which is transferred from the inconstant energy source to the primary mass flow of the working fluid.

The thermal transfer device operating temperature may correspond to the temperature of the working fluid which is fed into the thermal transfer device and which is necessary for operating the thermal transfer device.

The thermal storage device operating temperature may correspond to the temperature of the working fluid which may be transferred from the working fluid into the thermal storage device.

The heating device operating temperature being higher than at least one of the thermal transfer device operating temperature and the thermal storage device temperature may allow to ensure a safe operation of the thermal transfer device and/or the thermal storage device by ensuring to feed the working fluid comprising a predefined temperature, particularly a constant temperature, to the thermal transfer device and/or the thermal storage device. Particularly, during regular operation of the heating device, the heating device heats the primary mass flow by the heating device operating temperature which is higher than the thermal transfer device operating temperature and/or the thermal storage device operating temperature. At the merging section the primary mass flow and the secondary mass flow comprising a lower temperature than the heating device operating temperature because the secondary mass flow bypasses the heating device, are merged. Therefore, the working fluid downstream of the merging section comprises a lower temperature. This may allow to guide the working fluid comprising the predefined temperature, particularly the constant temperature, to the thermal storage device and/or the thermal transfer device. Hence, a safe operation of the thermal storage device and/or the thermal storage device may be ensured.

According to a further exemplary embodiment of the present invention, the heating device operating temperature is set to be 50 K to 500 K higher than at least one of the thermal storage device operating temperature and the thermal transfer device operating temperature.

The heating device operating temperature being 50 K to 500 K higher than the thermal storage device operating temperature may allow a safe operation of the thermal transfer device and/or the thermal storage device even if the primary mass flow comprises a fluctuation in the temperature provided by the inconstant energy source. Thereby, temperature fluctuations may be compensated by a cost-efficient and reliable system for storing thermal energy.

According to a further exemplary embodiment of the present invention, the system further comprises a further thermal transfer device comprising an inlet and an outlet, wherein the inlet is connected between the heating device and the merging section of the heating device bypass line, and wherein the outlet is connected between the merging section of the heating device bypass line and at least one of the thermal storage device and the thermal transfer device.

The further thermal transfer device may be identical to the thermal transfer device or may be a different type of thermal transfer device.

The inlet being connected between the merging section and the heating device may denote that the primary mass flow flowing through the heating device is divided downstream of the heating device. Particularly, a first part of the primary mass flow is directly guided through the further thermal transfer device and a second part of the primary mass flow is guided to the merging section. At the merging section the second part of the primary mass flow is merged with the secondary mass flow.

The outlet being connected between the merging section and at least one of the thermal transfer device and the thermal storage device may denote that downstream of the merging section the first part of the primary mass flow is merged with the second part of the primary mass flow already merged with the secondary mass flow.

The inlet of the further thermal transfer device may be the opening of the further thermal transfer device through which the working fluid enters the further thermal transfer device during a charging mode of the system for storing thermal energy for transferring thermal energy to a further thermal device.

The outlet of the further thermal transfer device may be the opening of the further thermal transfer device through which the working fluid leaves the further thermal transfer device during a charging mode of the system for storing thermal energy after transferring thermal energy to the further thermal device.

The further thermal transfer device may be integrated into the system for storing thermal energy upstream of the merging section, i.e. the further thermal transfer device may be supplied by at least a part of the working fluid directly originating from the heating device, namely a part of the primary mass flow. The benefit may be that the higher temperature of the heating device, i.e. the heating device operating temperature, may be used for feeding the further thermal transfer device before mixing the remaining working fluid flow to a lower temperature level. After leaving the further thermal transfer device the at least part of the primary mass flow may still have a significant amount of thermal energy which may be used for charging the thermal storage device and/or for supplying the thermal transfer device. This may be achieved by guiding at least part of the primary mass flow through the further thermal transfer device and merge it with the working fluid downstream of the merging section. Thereby, the further thermal transfer device may further compensate the fluctuating temperature introduced by the heating device.

Therefore, a higher operating temperature of the heating device may be used for operating the further thermal transfer device before mixing the remaining working fluid to a lower temperature level. Additionally, the further thermal transfer device may be used for the same purpose as the heating device bypass line.

According to a further exemplary embodiment of the present invention, the outlet is further connected to a bypass line, wherein the bypass line bypasses the thermal storage device and the thermal transfer device.

The bypass line bypassing the thermal storage device and the thermal transfer device may allow that in the case that the remaining thermal energy in the first part of the primary mass flow may not be sufficient, it is guided through the bypass line and is merged with the second part of the primary mass flow and the secondary mass flow at a point downstream of the thermal storage device and the thermal transfer device. Thereby, temperature fluctuations in the thermal storage device and the thermal transfer device may be inhibited.

According to a further exemplary embodiment of the present invention, the system further comprises a further heating device, particularly an electric resistant heater, arranged in the heating device bypass line.

Arranging a further heating device, particularly an electric resistant heater, in the heating device bypass line may allow to introduce additional thermal energy into the secondary mass flow in the case that the temperature of the primary mass flow leaving the heating device falls below a required thermal storage device operating temperature or a required thermal transfer device operating temperature. Hence, a simple system for storing thermal energy may be provided in which the charging of the thermal storage device and/or the supplying of the thermal transfer device may be ensured.

According to a further exemplary embodiment of the present invention, the system further comprises a further heating device, particularly an electric resistant heater, arranged between the heating device and the merging section of the heating device bypass line.

By arranging a further heating device, particularly an electric heater, between the heating device and the merging section, may allow to introduce additional thermal energy into the primary mass flow in the case that the temperature of the primary mass flow leaving the heating device falls below a required thermal storage device operating temperature or a required thermal transfer device operating temperature. Hence, a simple system for storing thermal energy may be provided in which the charging of the thermal storage device and/or the supplying of the thermal transfer device may be ensured.

According to a further exemplary embodiment of the present invention, the system further comprises a further heating device, particularly an electric resistant heater, arranged between the merging section and the thermal storage device and/or between the merging section and the thermal transfer device.

By arranging a further heating device, particularly an electric heater, between the merging section and the thermal storage device and/or the merging section and the thermal transfer device, may allow to introduce additional thermal energy into the working fluid in the case that the temperature of the primary mass flow leaving the heating device falls below a required thermal storage device operating temperature or a required thermal transfer device operating temperature. Hence, a part of the working fluid flowing through the thermal storage device and a part of the working fluid flowing through the thermal transfer device may comprise different temperatures adapted to the respective operating temperature.

According to a further aspect of the present invention, a method for operating a system for storing thermal energy as aforementioned is disclosed. The method comprises (a) heating a primary mass flow of a working fluid in a heating device, wherein the heating device is configured for heating the primary mass flow by an inconstant energy source, (b) dividing a working fluid in the primary mass flow and a secondary mass flow at a dividing section of a heating device bypass line, wherein the heating device bypass line is arranged in such a way that the secondary mass flow of the working fluid bypasses the heating device, (c) merging the primary mass flow and the secondary mass flow at a merging section of the heating device bypass line, (d) controlling the secondary mass flow in the heating device bypass line by a control unit such that the working fluid downstream of the merging section comprises a constant temperature, (e) feeding the working fluid downstream of the merging section to at least one of a thermal storage device and a thermal transfer device, wherein the thermal storage device is configured for storing thermal energy of the working fluid, and wherein the thermal transfer device is configured for transferring thermal energy of the working fluid to a thermal device and is connected in parallel to the thermal storage device.

Therefore, the system allows a simultaneous charging of the thermal storage device and supplying the thermal transfer device, in times when the heating device is active. When the heating device is inactive, the thermal energy for the thermal transfer device is providable by discharging the thermal storage device. With these two options, an uninterrupted thermal transfer device supply may be possible.

Hence, in contrast to conventional approaches, by the present invention, the heating device is bypassed by the secondary mass flow of the working fluid such that a temperature fluctuation of the working fluid introduced by the heating device may be compensated. Hence, by splitting the working fluid in the primary mass flow flowing through the heating device and the secondary mass flow flowing through the heating device bypass line according to the present invention, leads to a more cost efficient and robust system for storing thermal energy.

According to a further exemplary embodiment of the present invention, the thermal transfer device may be a heat recovery steam generator (HRSG) with a connected Rankine water-steam cycle for the purpose of re-electrification. Alternatives for this type of thermal transfer device include heat exchangers with other types of attached re-electrification cycles, e.g. a Brayton cycle or a Stirling cycle. A heat exchanger may also be used to provide process steam or process heat to the thermal device such as an attached industrial process, district heating or the like.

According to a further exemplary embodiment of the present invention, the thermal storage device may be a component for temporary storage of thermal energy. The thermal storage device consists of an insulated housing with on or more inlet channels and one or more outlet channels arranged on top and/or next to each other. Optionally, the inlet/outlet channels may be equipped with flaps/dampers in order to control the mass flow distribution between multiple channels. The housing is filled with a storage material, e.g. volcanic rocks configured as a pebble bed. Alternatives include sand, bricks, salt or ceramics, or a combination thereof.

According to a further exemplary embodiment of the invention, the flow direction of the working fluid through the thermal storage device may be reversed when switching from the charging mode to the discharging mode. Alternatively, the flow direction of the working fluid may remain the same. During the charging mode and the discharging mode, a constant operation of the thermal transfer device may be made possible.

According to a further exemplary embodiment of the invention, the system for storing thermal energy may be designed in such a way that the temperature which is usually generated in the heating device, i.e. the heating device operating temperature, is higher than the temperature required by the thermal storage device, i.e. the thermal storage device operating temperature, and the thermal transfer device, i.e. the thermal transfer device operating temperature. The heating device bypass line is then used to lower the temperature of the working fluid leaving the heating device. A possible temperature difference lies in the range of 50 K to 200 K but depends on the sensitivity of the thermal storage device and the thermal transfer device. A higher temperature difference may guarantee a more stable temperature at the more sensitive component of the system, since even if major temperature fluctuations occur, the temperature will not fall below the operating temperature of the thermal storage device or the thermal transfer device.

According to a further exemplary embodiment of the invention, a system for storing thermal energy comprising a heating device may already exist and provide temperatures at a certain level. Thereby, the thermal storage device and the thermal transfer device may be operated at a respective operating temperature which is lower than the heating device operating temperature.

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1 shows a schematical view of a system for storing thermal energy according to an exemplary embodiment of the present invention.

Fig. 2 shows a schematical view of a system for storing thermal energy according to a further exemplary embodiment of the present invention.

Fig. 3 shows a schematical view of a system for storing thermal energy according to a further exemplary embodiment of the present invention.

Fig. 4 shows a schematical view of a system for storing thermal energy according to a further exemplary embodiment of the present invention.

### Detailed Description

The illustrations in the drawings are schematically. It is noted that in different figures, similar or identical elements are provided with the same reference signs.

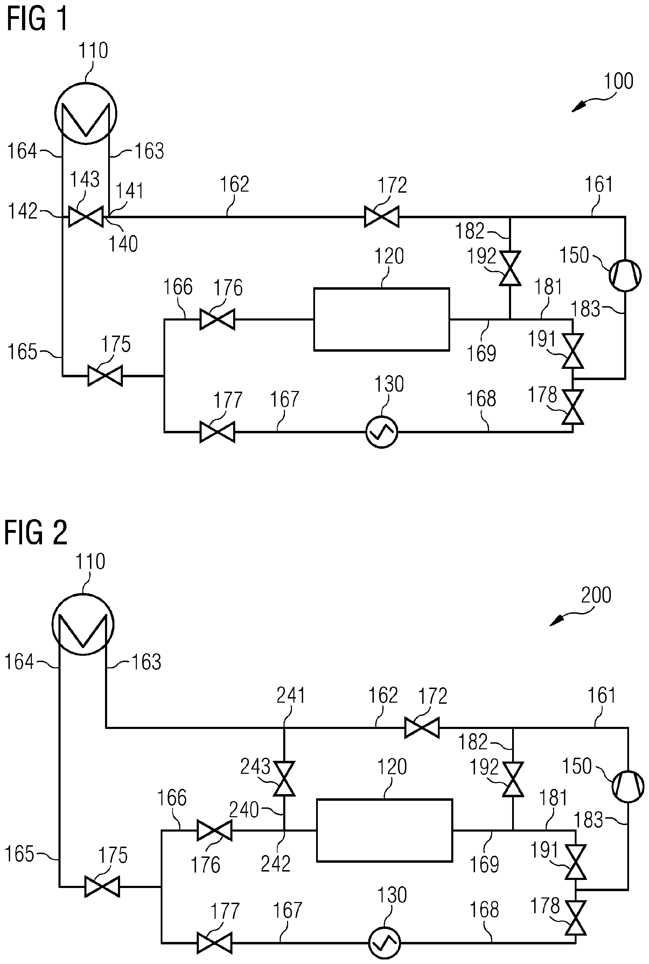

Fig. 1 shows a schematical view of a system 100 for storing thermal energy according to an exemplary embodiment of the present invention. The system 100 comprises a heating device 110 configured for heating a primary mass flow of a working fluid by an inconstant energy source, a thermal storage device 120 configured for storing thermal energy of the working fluid, a thermal transfer device 130 configured for transferring thermal energy of the working fluid to a thermal device, and being connected in parallel to the thermal storage device 120, and a fluid driving device 150, in particular a blower, for driving the working fluid. The system 100 further comprises a heating device bypass line 140 arranged in such a way that a secondary mass flow of a working fluid bypasses the heating device 110 while the primary mass flow of the working fluid flows through the heating device 110.

The working fluid is driven and accelerated by the fluid driving device 150, in particular by a blower, in a predominant and predetermined flow direction of the fluid driving device 150.

The system 100 further comprises a first line 161 which is connected between the downstream end of the fluid driving device 150 and a junction where the first line 161 is subdivided in a second line 162 and a twelfth line 182. The second line 182 is connected between the first line 161 and the dividing section 141 and comprises a second valve 172. The second valve 172 may be opened in a charging mode and may be closed in a discharging mode. The system 100 further comprises a third line 163 connecting the dividing section 141 and an inlet end of the heating device 110, as well as a fourth line 164 connecting an outlet end of the heating device 110 and the merging section 142. Additionally, the system 100 comprises the heating device bypass line 140 connecting the dividing section 141 and the merging section 142 and bypassing the heating device 110. The heating device bypass line 140 comprises the valve 143 which may control the secondary mass flow based on sensor data providing a temperature profile in the fourth line 164.

Further, a fifth line 165 connects the merging section 142 and a junction where the fifth line 165 is subdivided in a sixth line 166 and a seventh line 167, and comprises a fifth valve 175. The fifth valve 175 may be opened in the charging mode and may be closed in the discharging mode.

The sixth line 166 connects the junction subdividing the sixth line 166 and the seventh line 167 with the thermal storage device 120. The seventh line 167 connects the junction subdividing the sixth line 166 and the seventh line 167 with the thermal transfer device 130.

Additionally, a thirteenth line 183 connects a junction where an eleventh line 181 and an eighth line 168 are merged, with the upstream end of the fluid driving device 150. The eighth line 168 connects the thermal transfer device 130 and the junction merging the eighth line 168 and the eleventh line 181. The thermal storage device 120 is interconnected with the junction merging the eighth line 168 and the eleventh line 181 by a ninth line 169 and the eleventh line 181.

The sixth line 166 comprises a sixth valve 176 controlling the working fluid flowing to the thermal storage device 120 during a charging mode of the system 100. The sixth valve 176 may control the working fluid based on temperature data received from a sensor in the fifth line 165 and/or a sensor providing a signal representative for a charging state of the thermal storage device 120. The seventh line 167 comprises a seventh valve 177 controlling the working fluid flowing to the thermal transfer device 130. The seventh valve 177 may control the working fluid based on temperature data received from a sensor in the fifth line 165 and/or a sensor providing a signal representative for an operating state of the thermal transfer device 130. The twelfth line 182 interconnects the junction where the first line 161 is subdivided in the second line 162 and the twelfth line 182 and the ninth line 169 respectively the eleventh line 181. Furthermore, the twelfth line 182 comprises a twelfth valve 192 which is closed during a charging mode of the system 100 and which is opened during a discharging mode of the system 100.

The eleventh line 181 comprises an eleventh valve 191 which is open during a charging mode of the system 100 and closed during the discharging mode. The eighth line 168 comprises an eighth valve 178 controlling the working fluid flowing out of the thermal transfer device 130 during a charging mode and a discharging mode. Additionally, during a discharging mode of the system 100 the working fluid streams from the thermal storage device 120 to the thermal transfer device 130 via the sixth valve 176 and the seventh valve 177.

During the charging mode of the system 100 for storing thermal energy, the working fluid is guided by the fluid driving device 150 via the first line 161, and the second line 162 to the dividing section 141. There, the primary mass flow of the working fluid is guided by the third line 163 to the heating device 110. The heated primary mass flow of the working fluid leaves the heating device 110 via the fourth line 164. The inconstant energy source may be a concentrated solar power tower which may usually achieve temperatures of 600°C to 1500°C. The temperature of the working fluid downstream of the merging section 142, particularly in the fifth line 165 may be regulated by controlling the mass flow of the secondary mass flow through the heating device bypass line 140 which connects the second line 162 and the fifth line 165. Particularly, the secondary mass flow through the heating device bypass line 140 is controlled by means of the control unit 143 which comprises a valve 143. The resulting merged working fluid which is merged at the merging section 142 is guided through the fifth line 165.

The heating device 110 may simultaneously supply thermal energy to the thermal storage device 120 via the sixth line 166 to charge the thermal storage device 120 and supply thermal energy to the thermal transfer device 130 via the seventh line 167.

However, by closing the sixth valve 176 and opening the seventh valve 177, the working fluid may solely stream through the seventh line 167 to the thermal transfer device 130. Thereby, the working fluid flows through the eighth line 168 and the thirteenth line 183. The thermal storage device 120 is not charged and the entire working fluid is guided through the thermal transfer device 130.

Alternatively, by closing the seventh valve 177 and opening the sixth valve 176, the working fluid may solely stream through the sixth valve 166 to the thermal storage device 120. Thereby, the working fluid flows through the ninth line 169, the eleventh line 181 and the thirteenth line 183. The entire working fluid is guided through the thermal storage device 120 and no thermal energy is supplied to the thermal transfer device 130.

In Fig. 1, the fluid driving device 150 is positioned between the first line 161 and the thirteenth line 183. However, it should be mentioned that the position of the fluid driving device 150 is not limited to this position. Other positions are possible as long as the fluid driving device 150 may be effective in both the charging mode and the discharging mode. Further, it may be possible to use more than one fluid driving device 150, e.g. one fluid driving device 150 for each mode. Thereby, the positioning of the plurality of fluid driving devices 150 becomes more flexible.

During a discharging mode of the system 100, e.g. during times of low or no solar radiation, the thermal storage device 120 is responsible for supplying thermal energy to the thermal transfer device 130.

In the discharging mode, the thermal storage device 120 is discharged by streaming the working fluid by the fluid driving device 150 via the first line 161, the twelfth line 182, the ninth line 169, the thermal storage device 120, the sixth line 166, the seventh line 167, the eighth line 168, and the thirteenth line 183. In this operating mode, cold working fluid enters the thermal storage device 120 and the hot heat storage material transfers its thermal energy to the working fluid which leaves the thermal storage device 120 at an elevated temperature level. The thermal energy of the working fluid is then released in the thermal transfer device 130. During the discharging mode, the second valve 172, the fifth valve 175, and the eleventh valve 191 are closed.

The temperature of the working fluid reaching the thermal transfer device 130 during the discharging mode may be adjusted by a cooling bypass mass flow of the working fluid streaming through the second line 162, the heating device bypass line 140 and the fifth line 165. The cooling bypass mass flow of the working fluid is merged with the remaining mass flow of the working fluid flowing through the thermal storage device 120. The ratio between the cooling bypass mass flow of the working fluid and the remaining mass flow of the working fluid is chosen such that the resulting temperature matches with the thermal transfer device's requirements. It should be mentioned that it is possible to direct the cooling bypass mass flow of the working fluid through the inactive heating device 110 via the third line 163 and the fourth line 164.

**Fig.** 2 shows a schematical view of a system 200 for storing thermal energy according to a further exemplary embodiment of the present invention.

The system 200 comprises the heating device 110, the thermal storage device 120, the thermal transfer device 130 and the fluid driving device 150. In the system 200 as illustrated in Fig. 2, the secondary mass flow through the heating device bypass line 240 solely affects the thermal storage device 120. In other words, the heating device bypass line 240 connects the second line 162 and the sixth line 166. Thereby, the secondary mass flow may solely be providable to the thermal storage device 120. This may allow to provide the predefined temperature to the thermal storage device 120 and to supply the thermal transfer device 130 with a part of the primary mass flow of the working fluid comprising thermal energy directly from the heating device 110. This may be advantageously, if the thermal transfer device 130 may be operated with a fluctuating temperature without issues.

During the charging mode, at the dividing section 241 the working fluid flowing through the second line 162 is divided into the primary mass flow and the secondary mass flow flowing through the heating device bypass line 240. The secondary mass flow is controlled by the control unit 243 which comprises a valve 243. The primary mass flow flows from the dividing section 241 through the third line 163 to the heating device 110. After being heated in the heating device 110 by thermal energy provided by the inconstant energy source, the primary mass flow is guided through the fourth line 164 and the fifth line 165 to the junction subdividing the sixth line 166 and the seventh line 167. A first part of the primary mass flow is guided through the sixth line 166 to the merging section 242. At the merging section 242, the first part of the primary mass flow is merged with the secondary mass flow and is guided in the thermal storage device 120 as well as through the ninth line 169 and the eleventh line 181. A second part of the primary mass flow is guided through the seventh line 167, the thermal transfer device 130 and the eighth line 168. The working fluid is merged again in the thirteenth line 183 and is guided through the fluid driving device 150.

In the discharging mode, the thermal storage device is discharged by streaming the working fluid by the fluid driving device 150 via the first line 161, the twelfth line 182, the ninth line 169 through the thermal storage device 120, via the sixth line 166, the seventh line 167, through the thermal transfer device 130, and via the eighth line 168 as well as the thirteenth line 183. During the discharging mode, the second valve 172, the valve 243 controlling the secondary mass flow in the heating device bypass line 240, the fifth valve 175 and the eleventh valve 191 are closed.

The temperature of the working fluid reaching the thermal transfer device 130 during the discharging mode may be adjusted by a cooling bypass mass flow of the working fluid streaming through the second line 162 and the heating device bypass line 240. The cooling bypass mass flow of the working fluid is merged with the remaining mass flow of the working fluid flowing through the thermal storage device 120. The ratio between the cooling bypass mass flow of the working fluid and the remaining mass flow of the working fluid is chosen such that the resulting temperature matches with the thermal transfer device's requirements. Thereby, solely the fifth valve 175 and the eleventh valve 191 are closed. The second valve 172 and the valve 243 in the heating device bypass line 240 together control the cooling mass flow of the working fluid.

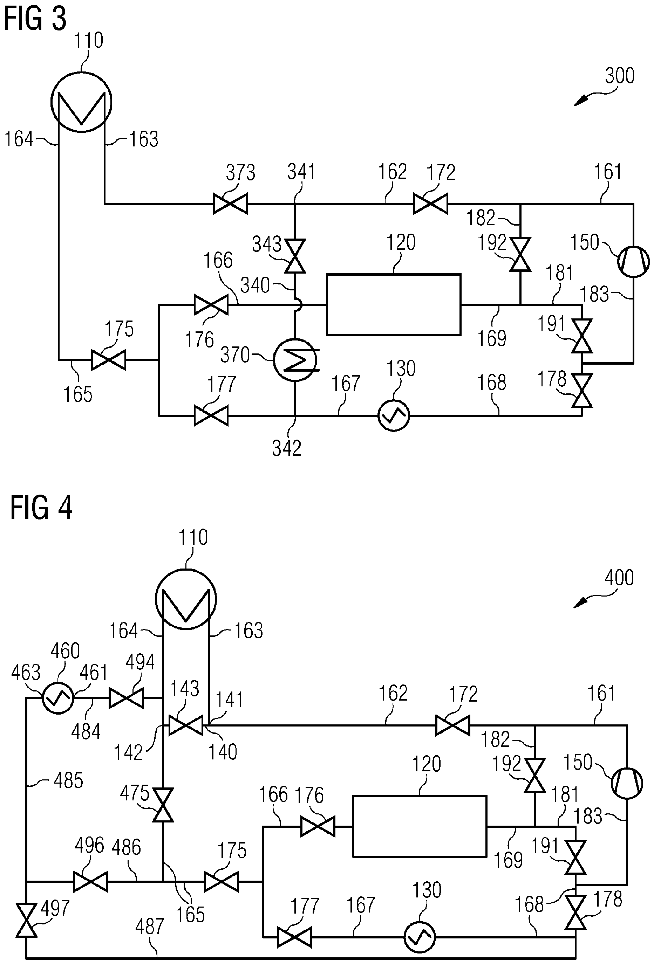

**Fig. 3** shows a schematical view of a system 300 for storing thermal energy according to a further exemplary embodiment of the present invention.

The system 300 comprises the heating device 110, the thermal storage device 120, the thermal transfer device 130 and the fluid driving device 150. The system 300 further comprises a further heating device 370 integrated in a heating device bypass line 340 as well as a third valve 373 integrated in the third line 163 for controlling the mass flow of the working fluid through the third line 163. Additionally, in the system 300, the secondary mass flow through the heating device bypass line 340 solely affects the thermal transfer device 130. In other words, the heating device bypass line 340 connects the second line 162 and the seventh line 167. Thereby, the secondary mass flow may solely be providable to the thermal transfer device 130. This may allow to supply the predefined temperature to the thermal transfer device 130 and to charge the thermal storage device 120 with a part of the primary mass flow of the working fluid comprising thermal energy directly from the heating device 110. This may be advantageously, if a constant thermal energy may be provided by the inconstant energy source.

During the charging mode, at a dividing section 341, the working fluid flowing through the second line 162 is divided into the primary mass flow and the secondary mass flow guided through the heating device bypass line 340 for bypassing the heating device 110. The secondary mass flow is controlled by a control unit 143 comprising the valve 343 arranged in the heating device bypass line 340. The primary mass flow flows from the dividing section 341 through the third line 163 to the heating device 110. The third valve 373 controls the primary mass flow. After being heated in the heating device 110 by thermal energy provided by the inconstant energy source, the primary mass flow is guided through the fourth line 164 and the fifth line 165 to the junction subdividing the sixth line 166 and the seventh line 167. A first part of the primary mass flow is guided through the seventh line 167 to the merging section 342. At the merging section 342, the first part of the primary mass flow is merged with the secondary mass flow and is guided to the thermal transfer device 130 as well as the eighth line 168. A second part of the primary mass flow is guided through the sixth line 166, the thermal storage device 120, the ninth line 169, and the eleventh line 181. The working fluid is merged again in the thirteenth line 183 and is guided through the fluid driving device 150.

During the discharging mode, the thermal storage device is discharged by streaming the working fluid by the fluid driving device 150 via the first line 161, the twelfth line 182, the ninth line 169 through the thermal storage device 120, via the sixth line 166, the seventh line 167, through the thermal transfer device 130, and via the eighth line 168 as well as the thirteenth line 183. During the discharging mode, the second valve 172, the fifth valve 175 and the eleventh valve 191 are closed.

The temperature of the working fluid reaching the thermal transfer device 130 during the discharging mode may be adjusted by a cooling bypass mass flow of the working fluid streaming through the second line 162 and the heating device bypass line 340. The cooling bypass mass flow of the working fluid is merged with the remaining mass flow of the working fluid flowing through the thermal storage device 120. The ratio between the cooling bypass mass flow of the working fluid and the remaining mass flow of the working fluid is chosen such that the resulting temperature matches with the thermal transfer device's requirements. Thereby, the fifth valve 175, the eleventh valve 191, and the third valve 373 are closed. The second valve 172 and the valve 343 in the heating device bypass line 340 together control the cooling mass flow of the working fluid.

The further heating device 370, in particular an electric resistant heater, may provide additional thermal energy to the secondary mass flow. Thereby, a reliable operation of the thermal transfer device 130 may be ensured.

**Fig. 4** shows a schematical view of a system 400 for storing thermal energy according to a further exemplary embodiment of the present invention.

The system 400 for storing thermal energy comprises the components of the system 100 as illustrated in Fig. 1. Additionally, the system 400 comprises a further thermal transfer device 460. The further thermal transfer device 460 comprises an inlet 461 and an outlet 463, wherein the inlet 461 is connected between the heating device 110 and the merging section 142 of the heating device bypass line 140, and wherein the outlet 463 is connected between the merging section 142 of the heating device bypass line 140 and at least one of the thermal storage device 120 and the thermal transfer device 130. In other words, the outlet 463 is connected via a fifteenth line 485 and a sixteenth line 486 to the fifth line 165. Furthermore, the fifteenth line 485 is connected to a bypass line 487 bypassing the thermal storage device 120 as well as the thermal transfer device 130. The bypass line 487 connects the fifteenth line 485 with the eighth line 168.

The further thermal transfer device 460 is integrated in the system 400 upstream of the bypass line 487. Additionally, the further thermal transfer device 460 may be supplied by a first part of the primary mass flow directly originating from the heating device 110 through a fourteenth line 484. A fourteenth vale 494 is arranged in the fourteenth line 484. The further thermal transfer device 460 may be switched to the system 400 by opening the fourteenth valve 494. Additionally, the fourteenth valve 494 may control the mass flow flowing through the further thermal transfer device 460. The inlet 461 of the further thermal transfer device 460 is connected to the fourteenth line 484 and the outlet 463 of the further thermal transfer device 460 is connected to the fifteenth line 485.

During the charging mode, at the dividing section 141, the working fluid is divided in the primary mass flow and the secondary mass flow. The secondary mass flow bypasses the heating device 110 by flowing through the heating device bypass line 140 to the merging section 142. The valve 143 controls the secondary mass flow. The primary mass flow is guided via the third line 163 to the heating device 110, is heated with thermal energy provided by the inconstant energy source and is guided to the fourth line 164. In the fourth line 164 the primary mass flow is divided into the first part of the primary mass flow flowing through the fourteenth line 484, the inlet 461, the further thermal transfer device 460, the outlet 463, and the fifteenth line 485. A second part of the primary mass flow is guided directly to the merging section 142 and is merged with the secondary mass flow. Then the second part of the primary mass flow and the secondary mass flow are guided via the fifth line 165 to the thermal storage device 120 and/or the thermal transfer device 130.

After flowing out of the further thermal transfer device 460 via the fifteenth line 485, the first part of the primary mass flow may still comprise a significant amount of thermal energy, which may be used for charging the thermal storage device 120 and/or supplying the thermal transfer device 130. Thereby, the first part of the primary mass flow is guided from the fifteenth line 485 via a sixteenth line 486 to the fifth line 165, where it is merged with the second part of the primary mass flow and the secondary mass flow.

After flowing out of the further thermal transfer device 460 via the fifteenth line 485, the first part of the primary mass flow may comprise insufficient thermal energy. Hence, the first part of the primary mass flow may be guided from the fifteenth line 485 to the bypass line 487 bypassing the thermal storage device 120 and the thermal transfer device 130. The first part of the primary mass flow is merged with the secondary mass flow and the second part of the primary mass flow downstream of the thermal storage device 120 and the thermal transfer device 130, particularly in the eighth line 168.

The system 400 further comprises a sixteenth valve 496 arranged in the sixteenth line 486 and a bypass valve 497 in the bypass line 487. The sixteenth valve 496 and the bypass valve 497 together control dependent on the amount of thermal energy in the first part of the primary mass flow if the first part of the primary mass flow is guided through the thermal storage device 120 and/or the thermal transfer device 130 or is bypassing the thermal storage device 120 and the thermal transfer device 130 via the bypass line 487.

The system further comprises a further fifth valve 475 arranged in the fifth line 165. The further fifth valve 475 controls the merging of the second part of the primary mass flow and the secondary mass flow.

The temperature of the working fluid reaching the thermal transfer device 130 during the discharging mode may be adjusted by a cooling bypass mass flow of the working fluid streaming through the second line 162, the heating device bypass line 140 and the fifth line 165. The cooling bypass mass flow of the working fluid is merged with the remaining mass flow of the working fluid flowing through the thermal storage device 120. The ratio between the cooling bypass mass flow of the working fluid and the remaining mass flow of the working fluid is chosen such that the resulting temperature matches with the thermal transfer device's requirements. It should be mentioned that it is possible to direct the cooling bypass mass flow of the working fluid through the inactive heating device 110 via the third line 163 and the fourth line 164.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. System (100, 200, 300, 400) for storing thermal energy, the system (100, 200, 300, 400) comprising
a heating device (110) configured for heating a primary mass flow of a working fluid by an inconstant energy source,
a thermal storage device (120) configured for storing thermal energy of the working fluid, and
a thermal transfer device (130) configured for transferring thermal energy of the working fluid to a thermal device, and being connected in parallel to the thermal storage device (120), and
a heating device bypass line (140, 240, 340) arranged in such a way that a secondary mass flow of the working fluid bypasses the heating device (110),
wherein the heating device bypass line (140, 240, 340) comprises a dividing section (141, 241, 341) configured for dividing the working fluid into the primary mass flow and the secondary mass flow, and a merging section (142, 242, 342) configured for merging the primary mass flow with the secondary mass flow,
wherein the heating device bypass line (140, 240, 340) further comprises a control unit (143) for controlling the secondary mass flow such that the working fluid downstream of the merging section (142) comprises a predefined temperature, wherein the working fluid downstream of the merging section (142) is feedable to at least one of the thermal storage device (120) and the thermal transfer device (130).

2. System (100, 200, 300, 400) according to claim 1, wherein the control unit (143) comprises a valve (143) for controlling the secondary mass flow.

3. System (100, 200, 300, 400) according to claim 1 or 2, wherein the heating device (110) comprises at least one of the group comprising
a solar plant utilizing solar energy, particularly from a concentrated solar power tower and/or a parabolic trough solar collector,
an industrial process unit generating waste heat,
a technical process unit generating waste heat, and
a gas turbine generating flue gas.

4. System (100, 200, 300, 400) according to any one of the claims 1 to 3,
wherein the thermal transfer device (130) comprises at least one of a heat recovery steam generator, particularly with a connected Rankine water-steam cycle or with a connected industrial process requiring steam, and a heat exchanger, particularly with a connected Brayton cycle, a connected Stirling cycle or a connected industrial process requiring heat.

5. System (100, 200, 300, 400) according to any one of the claims 1 to 4,
the system further comprising a fluid driving device (150), in particular a blower, for driving the working fluid.

6. System (100, 200, 300, 400) according to any one of the claims 1 to 5,
wherein the thermal transfer device (130) is configured for being operatable at a temperature in the range of 400°C to 1500°C.

7. System (100, 200, 300, 400) according to any one of the claims 1 to 6,
wherein the thermal storage device (120) is configured for being operatable at a temperature in the range of 400°C and 1000°C.

8. System (100, 200, 300, 400) according to any one of the claims 1 to 7,
wherein the heating device (110) is configured for being operatable at a heating device operating temperature, the thermal transfer device (130) is configured for being operatable at a thermal transfer device operating temperature, and the thermal storage device (120) is configured for being operatable at a thermal storage device operating temperature, wherein the heating device operating temperature is higher than at least one of the thermal transfer device operating temperature and the thermal storage device operating temperature.

9. System (100, 200, 300, 400) according to claim 8,
wherein the heating device operating temperature is set to be 50 K to 500 K higher than at least one of the thermal storage device operating temperature and the thermal transfer device operating temperature.

10. System (100, 200, 300, 400) according to any one of the claims 1 to 9,
the system (100, 200, 300, 400) further comprising a further thermal transfer device (460) comprising an inlet (461) and an outlet (463),
wherein the inlet (461) is connected between the heating device (110) and the merging section (142) of the heating device bypass line (140, 240, 340), and
wherein the outlet (463) is connected between the merging section (142) of the heating device bypass line (140, 240, 340) and at least one of the thermal storage device (120) and the thermal transfer device (130).

11. System (100, 200, 300, 400) according to claim 10, wherein the outlet (463) is further connected to a bypass line (487),
wherein the bypass line (487) bypasses the thermal storage device (120) and the thermal transfer device (130).

12. System (100, 200, 300, 400) according to any one of the claims 1 to 11,
the system (100, 200, 300, 400) further comprising a further heating device (370), particularly an electric resistant heater, arranged in the heating device bypass line (340).

13. System (100, 200, 300, 400) according to any one of the claims 1 to 12,
the system (100, 200, 300, 400) further comprising a further heating device (370), particularly an electric resistant heater, arranged between the heating device (110) and the merging section (142) of the heating device bypass line (140, 240, 340).

14. System (100, 200, 300, 400) according to any one of the claims 1 to 13,
the system (100, 200, 300, 400) further comprising a further heating device (370), particularly an electric resistant heater, arranged between the merging section (142) and the thermal storage device (120) and/or between the merging section (142) and the thermal transfer device (130).

15. Method for operating a system (100, 200, 300, 400) for storing thermal energy according to any one of the preceding claims, the method comprising
heating a primary mass flow of a working fluid in a heating device (110),
wherein the heating device (110) is configured for heating the primary mass flow by an inconstant energy source,
dividing a working fluid in the primary mass flow and a secondary mass flow at a dividing section (141, 241, 341) of a heating device bypass line (140, 240, 340),
wherein the heating device bypass line (140, 240, 340) is arranged in such a way that the secondary mass flow of the working fluid bypasses the heating device (110),
merging the primary mass flow and the secondary mass flow at a merging section (142, 242, 342) of the heating device bypass line (140, 240, 340),
controlling the secondary mass flow in the heating device bypass line (140, 240, 340) such that the working fluid downstream of the merging section (142, 242, 342) comprises a constant temperature,
feeding the working fluid downstream of the merging section (142, 242, 342) to at least one of a thermal storage device (120) and a thermal transfer device (130),
wherein the thermal storage device (120) is configured for storing thermal energy of the working fluid, and
wherein the thermal transfer device (130) is configured for transferring thermal energy of the working fluid to a thermal device and is connected in parallel to the thermal storage device (120).
